(19) Europäisches Patentamt
European Patent Office
Office européen des brevets

(11) **EP 2 572 818 A1**

(12) # EUROPEAN PATENT APPLICATION

(43) Date of publication:
**27.03.2013 Bulletin 2013/13**

(51) Int Cl.:
***B23D 61/18*** *(2006.01)*

(21) Application number: **11182470.2**

(22) Date of filing: **23.09.2011**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NV Bekaert SA**
**8550 Zwevegem (BE)**

</td><td>

(72) Inventors:
• **Van Haeke, Martin**
  **B-8870 Izegem (BE)**
• **Van Rysselberghe , Kurt**
  **B-9041 Gent (BE)**

(74) Representative: **Seynhaeve, Geert Filiep**
  **NV Bekaert SA**
  **Bekaertstraat 2**
  **8550 Zwevegem (BE)**

</td></tr>
</table>

(54) **A fixed abrasive sawing wire with improved abrasive particle retention**

(57)     A fixed abrasive sawing wire (100) is described comprising a metal wire (110) and abrasive particles (112) - such as diamond - attached thereto by means of a metallic binder layer (114) that is preferably nickel. The metal wire (110) can be a steel wire such as plain carbon steel wire or a stainless steel wire or it can be a composite steel wire comprising a core and a sheath. The core can for example be plain carbon steel while the sheath can be made of a soft and well conducting metal such as for example copper. Special about the wire is that it has one or more flat faces (104) on the otherwise round wire. The flat faces (104) have a certain flat width (f) that is less than about twice the median size of the abrasive particles (112). By providing flat surfaces (104) on the wire the chances for better abrasive retention are improved. Indeed the flats (104) may provide a better contact surface for the flat faces on the abrasive particles (112).

Fig. 5

EP 2 572 818 A1

## Description

## Technical Field

The invention relates to a fixed abrasive sawing wire. Fixed abrasive sawing wires are used to cut hard and brittle materials like silicon, quartz, gallium arsenide, silicon carbide, sapphire, magnetic materials or any other expensive material with a cutting length below an arm's length.

## Background Art

Fixed abrasive sawing wires are making their inroads into various industries thereby replacing the use of loose abrasive sawing wire on wire saws such as multi-wire saws for wafering, cropping saws for ingot shaping, squaring saws for bricking of ingots. While loose abrasive sawing - wherein a fine steel wire entrains abrasive particles carried in a slurry into the saw cut - relies on three body abrasion (the work piece, the abrasive and the wire) a fixed abrasive sawing wire process relies on two body abrasion (the work piece and the abrasive on the wire). On a fixed abrasive sawing wire, the abrasive particles are firmly fixed to the wire.

The technique of loose abrasive sawing has some inherent disadvantages such as:

- the changing slurry composition during use necessitates a tight process control;
- the reworking or discarding of the used slurry that contains work piece debris as well as abrasive particles brings a high environmental cost with it, and;
- the extensive use of consumables like abrasive, carrier fluid and wire add to the total cost of ownership for the user.

Some of these disadvantages are overcome by using fixed abrasive sawing wire. The coolant that can be used during sawing can be simple and be water based. Used coolant predominantly contains work piece debris and not so much abrasive (the abrasive remains with the wire) and more surface can be sawn with the same length of wire reducing the cost of consumables.

One of the main challenges in producing a fixed abrasive sawing wire is the fixing of the abrasive to the wire. Different requirements have to be met in this respect:

- The abrasive must protrude sufficiently from the surface of the wire in order to be able to abrade the work piece. Even if some of the abrasive is chipped off, the remaining part should still stand out of the wire;
- The abrasive must be able to cut from the very first meters i.e. the abrasive tip should not be covered in order to eliminate the need for a dressing step ('dressing' is the action wherein abrasives are disclosed prior to first use).

- The fixation must be able to withstand the forces acting on the abrasive particle during sawing;
- The fixation must withstand the interaction with the coolant and should not be degraded by it.

At present various techniques are explored in order to fix the abrasive particles - that are usually diamond micro-grit particles - to a carrier wire:

- Fixation can be done through a mechanical bond: by pressing diamond particles in a soft sheathed high tensile wire such as e.g. described in application with application number EP2010/055678 of the current applicant.
- A metallurgical bond has also been considered e.g. by brazing or soldering the particles to the surface of the wire like e.g. described in WO 99/46077. However, this is less preferred because the heat loading of the wire results in an unfavourable loss of strength of the wire.
- A resin bond such as e.g. described in US 6070570 has also been studied extensively. However, it turns out to be difficult to hold the particles in the resin during sawing.
- By electrolytic or electroless fixation of the diamond particles. An early reference on that is German patent DE 916 143 (1954).

As in this application improvements are presented for the latter type of fixation technology it will be more discussed in detail. Basically there are two distinct ways to attach diamonds to a wire by electrochemical means:

There is the electroless nickel (EN) process. In this process the wire is submerged in a bath of abrasive particles with an aqueous solution comprising diamonds and an electrolyte comprising metal ions (nickel), a reducing agent (e.g. sodium hypo phosphate), complexing agents (such as citric acid) and bath stabilisers. The bath is autocatalytic in that by submerging the wire into the bath a nickel coating will form on the wire. There is no current source needed to plate the wire (hence the term electroless). When now the diamond particles are covered with a conductive layer (preferably of nickel) the diamond particles will likewise be conformally covered with nickel, thereby fixing the diamond particles to the wire. The process has the drawbacks that it goes slow, the bath has a finite lifetime and needs stringent bath care. Also the process generates hydrogen at the surface which can be detrimental for the fatigue life of the steel. Usually the EN coating is enriched with phosphorous in order to make the coating harder. This hardening requires a heat treatment in excess of 400°C which is again not preferred on fine wires. When coating with an electroless bath, a batch process is normally used, an example of such a batch process is described in US 2004/0001922.

Next to that there is the electrolytic deposition of nickel and nickel coated abrasive particles. In this case an electrical current is made to flow between the wire substrate and the electrolyte bath which moves the cations (nickel ions) towards the substrate in the resulting electrical field in the bath. By bringing the diamond particles in electrical contact with the wire substrate, they are also covered with nickel and stick to the wire. An example is described in EP2277660.

In fixed abrasive sawing wires obtained by these electrolytic or electroless processes, the fixation is guaranteed on the one hand by good adherence of the binder layer (usually nickel) to the metal wire and on the other hand the good adherence of the binder layer to the abrasive particle (usually diamond). Furthermore the binder layer material should be sufficiently stiff so as to prevent movement of the abrasive so that it does not wick out of its position. While these properties appear to be sufficiently guaranteed the inventors suggest a way to even further improve the retention of the abrasive particles by taking into account the shape of the substrate wire used.

Using wires with a shaped cross section as substrate wire for fixed abrasive sawing wire is known. JP 2010 167509 e.g. describes a round substrate wire that is flattened and wherein abrasive particles are preferably attached to the curved parts. Another example is JP 2007 196329 wherein abrasive particles are preferably present on the raised portions of the wire. A further example is JP 2003 231063 wherein the substrate wire has a vertically long cross section. Finally JP 2005 238377 describes a sawing wire with a triangular cross section with all sides coated with abrasive.

**Disclosure of Invention**

The primary object of the invention is to further improve the retention of the abrasive particles to the wire. A further object is to provide methods in order to realise such wires.

According a first aspect of the invention a fixed abrasive sawing wire is described. The fixed abrasive sawing wire comprises a metal wire and abrasive particles attached thereto by means of a metallic binder layer. With 'attached thereto' is meant that the particles reside on the outer surface of the wire and are held to the outer surface with the metallic binder layer. The abrasive particles have a median size. Characteristic about the fixed abrasive sawing wire is that the metal wire has at least one flat. Such a flat has a measurable 'flat width' when taking a cross section perpendicular to the axis of the metal wire at the flat. The width of this flat is smaller or equal than twice the median size of the abrasive particles.

The metal wire is a single filament that can be composed of one or more metals or metal alloys. The diameter of the circle circumscribing the metal wire is below 300 $\mu$m, preferably below 200 $\mu$m while typical gauges nowadays are 150 $\mu$m or even 120 $\mu$m wire while 100 $\mu$m is currently being explored.

A first preferred metal wire is a steel wire. The metal wire is made solely of plain carbon steel or of stainless steel. Practical plain carbon steel compositions do not only comprise iron and carbon but a lot of other alloy and trace elements, some of which have a profound influence on the properties of the steel in terms of strength, ductility, formability, corrosion resistance and so on. The following elemental composition is preferred for the plain carbon steel wire:

- At least 0.70 wt% of carbon, the upper limit being dependent on the other alloying elements forming the wire (see below)
- A manganese content between 0.30 to 0.70 wt%. Manganese adds - like carbon - to the strain hardening of the wire and also acts as a deoxidiser in the manufacturing of the steel.
- A silicon content between 0.15 to 0.30 wt%. Silicon is used to deoxidise the steel during manufacturing. Like carbon it helps to increase the strain hardening of the steel.
- Presence of elements like aluminium, sulphur (below 0.03wt%), phosphorous (below 0.30wt%), copper (below 0.60wt%) should be kept to a minimum.
- The remainder of the steel is iron and other elements With this kind of plain carbon steels, tensile strengths in excess of 3500 N/mm² are easily reached, while - with a proper selection of material and processing - strengths in excess of 3750 N/mm² and even 3900 N/mm² can be obtained.

The presence of chromium (0.005 to 0.30%wt), vanadium (0.005 to 0.30%wt), nickel (0.05-0.30%wt), molybdenum (0.05-0.25%wt) and boron traces may reduce the formation of grain boundary cementite for carbon contents above the eutectoid composition (0.80%wt C) and thereby improve the formability of the wire. Such alloying enables carbon contents of 0.90 to 1.20%wt, resulting in tensile strengths that can be higher as 4000 MPa on steel core wire level. Such steels are also preferred and are presented in US 2005/0087270.

In general the tensile strength 'TS' of the metal wire c.q. plain carbon steel wire - expressed in N/mm² - is preferable above:

$$TS \geq 4700 - 7.4 \times d$$

wherein 'd' is the diameter of the metal wire expressed in micrometer.

Preferred stainless steels contain a minimum of 12% Cr by weight and a substantial amount of nickel. More preferred stainless steel compositions are austenitic stainless steels as these can easily be drawn to fine diameters. The more preferred compositions are those known in the art as AISI 302 (particularly the 'Heading Quality' HQ), AISI 301, AISI 304 and AISI 314. 'AISI' is the abbreviation of 'American Iron and Steel Institute'.

An alternative metal wire is a composite wire in that it has a core and a sheath both made of a metal or metal alloy. The sheath covers the core entirely.

Again suitable compositions for the core are plain carbon steel or stainless steels with the compositions as explained in paragraph [0014] to [0015] and [0017] above.

By preference the sheath metal or metal alloy is softer than the core metal or metal alloy. Preferred metals for the sheath comprise one or more metals (i.e. forming an alloy when more than one metal is present) out of the group comprising copper, silver, aluminium, gold, zinc, tin or cobalt. Most preferred are copper, brass (an alloy of copper and zinc), or bronze (an alloy of copper and tin).

If the sheath metal is considerably softer than the core metal - as measured on the final wire diameter - and the metals or metal alloys of core and sheath do not diffuse easily into one another, an interface layer between sheath and core can be obtained that is rough in aspect. The interface becomes discernable in a metallographic cross section in a direction perpendicular to the axis of the wire. The relative hardness of sheath and core can be assessed through a standard micro-Vickers hardness test (see ISO 6507-3 '*Metallic Hardness Test: Vickers test less than HV 0.2*'). The advantage of having such a rough interface is that a more intimate bond between core and sheath can be obtained. Such an intimate bond is important in order to prevent delamination of the sheath from the core during sawing.

Quantification of the roughness of the interface can be done in the manner described in WO 2010/125083, paragraphs [0019] to [0021]. In this way it is possible to measure 'an arithmetical mean deviation roughness $R_a$'. This measure should be above 0.50 $\mu$m in order to have a good bond between core and sheath.

Even more preferred is if the rough interface between core and sheath is interlocking: the metal of the core than hooks into the sheath and vice versa.

Another advantage of using a composite metal wire is that by introducing a conductive sheath, the electrolytic deposition process of the abrasive particles can be greatly improved. Indeed, as most of the cross sectional area of a round wire is just below its circumference, it is advantageous to make the sheath the more current conducting part. This is particularly important in that:

- as fixed abrasive sawing wires get smaller and smaller in diameter, and their resistance per meter increases inversely proportional to their diameter it becomes difficult to provide the necessary coating current over sufficiently long length without having intermediate contacts;
- the increased resistance also leads to increased resistance heating of the wire;
- as in the electrolytic deposition process the current is consumed at the outer surface it is best that the current is flowing there where it is consumed.

By choosing the thickness of the sheath layer such that the conductance of the sheath is higher than the conductance of the core, more than half of the electrical current will flow through the sheath. The conductance of the sheath (or core) is equal to the product of cross sectional area of the sheath (or core) with the electrical conductivity of the sheath metal (or core metal) divided by the length of the sheath (or core, but this length is equal for both sheath and core for a given length of metal wire).

Alternatively a sheath of high conductance can be achieved if the core has an equivalent core diameter that is less than 96 per cent of the circumscribed circle diameter of the metal wire and wherein the electrical conductivity of the sheath metal is at least three times the electrical conductivity of the core metal. With 'equivalent core diameter' is meant the diameter of an imaginary circle that has the same surface area as the cross sectional area of the core. As the core may show an interface that is rough it may not be easy to determine the diameter of the core. Likewise as the metal wire shows at least one flat in cross section, the 'diameter of the circumscribed circle' is used as a measure for the diameter of the metal wire.

The abrasive particles can be superabrasive particles such as diamond (natural or artificial, the latter being somewhat more preferred because of their lower cost and their grain friability), cubic boron nitride or mixtures thereof. For less demanding applications particles such as tungsten carbide (WC), silicon carbide (SiC), aluminium oxide ($Al_2O_3$) or silicon nitride ($Si_3N_4$) can be used: although they are softer, they are considerably cheaper than diamond. However, most preferred remains diamond.

The size of the abrasive particles somewhat scales with the diameter of the wire. Determining the size and shape of the particles themselves is a technical field in its own right. As the particles have not - and should not have - a spherical shape, for the purpose of this application reference will be made to the 'size' of the particles rather than their 'diameter' (as a diameter implies a spherical shape). The size of a particle is a linear measure (expressed in micrometer) determined by any measuring method known in the field and is always somewhere in between the length of the line connecting the two points on the particle surface farthest away and the length of the line connecting the two points on the particle surface closest to one another.

The size of particles envisaged for the fixed abrasive sawing wire fall into the category of 'microgrits'. The size of microgrits cannot longer be determined by standard sieving techniques which are customary for macrogrits. Instead they must be determined by other techniques such as laser diffraction, direct microscopy, electrical resistance or photosedimentation. The standard ANSI B74.20-2004 goes into more detail on these methods. For the purpose of this application when reference is made to a particle size, the particle size as determined by the laser diffraction method (or 'Low Angle Laser Light Scattering' as it is also called) is meant. The output of such a procedure is a cumulative or differential particle size distribution with a median $d_{50}$ size (i.e. half of the particles are smaller than this size and half of the particles are larger than this size) or in general 'd$_P$' wherein 'P' percent of the particles is smaller than this 'd$_P$' the remaining part (100-P) percent being larger sized than this 'd$_P$'.

Superabrasives are normally identified in size ranges by this standard rather than by sieve number. E.g. particle distributions in the 20-30 micron class have 90% of the particles between 20 micrometer (i.e. 'd$_5$') and 30 micrometer (i.e. 'd$_{95}$') and less than in 1 in 1000 over 40 microns while the median size $d_{50}$ must be between 25.0 +/ 2.5 micron.

The median particle size that is preferred for this application is smaller than 50 $\mu$m. For example the medium size classes 30 to 40 $\mu$m or fine size classes with median size between 10 to 20 $\mu$m such as 6 - 12 $\mu$m or 8 - 16 $\mu$m or 25 - 35 $\mu$m.

Besides the size of the particles also their shape is of importance as they should show different flat faces. Therefore diamonds should preferably of the crushed type, as these show different flat faces and are elongated (as opposed to as grown diamonds which show a shape between that of a cube and an octahedron). One measure - but therefore not the only relevant one - is that of elongation which can be defined as (1-W/L)$\times$100 in per cent wherein 'L' is the longest axis of an inertia ellipsoid circumscribing a particle and 'W is the shortest axis of that inertia ellipsoid Preferably this elongation is higher than 10% or even better higher than 20%, such as higher than 25%.

By preference the diamond has a metal or metal containing pre-coating. Such pre-coating can help to increase the bond strength between diamond and metallic binder layer. Known coatings are iron, copper or, most used, nickel. However, other metals such as titanium, zirconium, tungsten, vanadium, chromium are more preferred as these are good carbide formers and therefore form their respective carbides. Coating can also be done directly with the carbide such as tungsten carbide or titanium carbide in a chemical vapour deposition unit.

Preferably the amount of abrasive particles present in the fixed abrasive sawing wire is between 0.1 to 1.0 gram per km of wire. More preferred is between 0.4 to 0.8 gram per km. By preference abrasive particles are present solitary on the surface of the metal wire i.e. without touching one another. Paired or clogged abrasive particles should be avoided.

The inventors claim that by providing flat surfaces on the wire - called 'a flat' in what follows - the flat faces of the abrasive particles will preferably face the flat surface on the wire resulting in an increased contact surface between the abrasive and the metal wire. Although not every particle will have one of its faces parallel to the flat of the wire, the probability of having high contact surface area will anyhow increase compared to a completely round metal wire as on a completely round wire there is simply no possibility to match the flat surface of the abrasive particle to the round wire.

The presence of a flat is clear from a cross section taken perpendicular to the axis of the metal wire at the position of the flat. The cross section will show a deviation from the otherwise round shape of the wire. In the cross section, a flat width 'f' can be determined. Geometrically it can be defined as the chord length associated with the flat. If D is the diameter of the circle circumscribing the metal wire in which the flat is made, and 's' is the sagitta - i.e. the perpendicular distance from an arc's midpoint to the chord across it - the flat width 'f' is given by:

$$\left(D - 2s\right)^2 = D^2 - f^2$$

It struck the inventors that already a very small sagitta can lead to a large flat on the size of wires involved. E.g. on a 120 $\mu$m diameter 'D' wire, a sagitta 's' of only 0.8 $\mu$m leads to a flat width 'f' of 19.5 $\mu$m which is about the preferred median size of the abrasive particles.

Flats can be present on the wire on isolated spots. This can e.g. be obtained by hammering the metal wire locally while moving in axial direction. More preferred is if a flat is present along the length of the wire for example by slightly rolling the wire between two parallel rolls separated by a gap of (D-2s). Not much pressure is needed in order to obtain the desired degree of flat width 'f'. The flats can come in pairs that are diametrically opposite to each other. However, this is not necessarily so. By using a roller device with one 'V' - grooved roller and one opposing flat roller, flats can be implemented that do not oppose one another i.e. flats are present separated about 120° around the wire. The flat or flats can be formed into the shape of a helix by implementing a torsion on the wire or by rotating the rolls around the axis of the wire.

Preferably the whole circumference of the wire shows flat sections in order to increase the probability to attach abrasive particles. The cross section then shows - a not necessarily regular - polyhedron with slightly rounded corners. The number of edges can vary over the length of the wire as some of the pairs of flats can e.g. be turning in 'S' direction (counterclockwise) while other pairs turn in 'Z' direction (clockwise) around the wire axis. In any case the polyhedron preferably shows more than six edges, for example more than 12 or more than 16.

As already a very minute rolling of a round wire will result in the necessary flattening of the wire, the rolling can be performed on a metal wire that consists of plain steel. When the metal wire is a composite wire with a metallic outer sheet that is softer than the core, rolling will even go easier. Therefore, alternatively one can make use of shaped dies in order to draw the wire in the desired shape.

The abrasive particles are attached to the surface of said metal wire by means of a metallic binding layer. By preference this binding layer is electrolytically applied onto the metal wire together with the abrasive particles. Preferred binding metals are one or more metals chosen out of the group comprising iron, nickel, chromium, cobalt, molybdenum, tungsten, copper, zinc, tin and alloys thereof are preferred. Most preferred is nickel.

As a further benefit of the invention it is to be noted that - due to the presence of the flats on the wire - the overall circle, circumscribing also the diamonds, may have a smaller diameter compared to the wire without flats in it. At best this reduction in diameter is of the order of twice the sagitta.

**Brief Description of Figures in the Drawings**

Figure 1 describes a first preferred embodiment of the invention.

Figure 2a describes a first possible way of implementing flats on the metal wire with the associated cross section 2b.

Figure 3a shows a second way to have flats present on the metal wire, while Figure 3b shows a cross section of that wire along section AA.

Figure 4a shows a third way to have flats present on the metal wire while Figure 4b shows a cross section of that wire along section BB.

Figure 5 shows a second preferred embodiment of the invention.

**Mode(s) for Carrying Out the Invention**

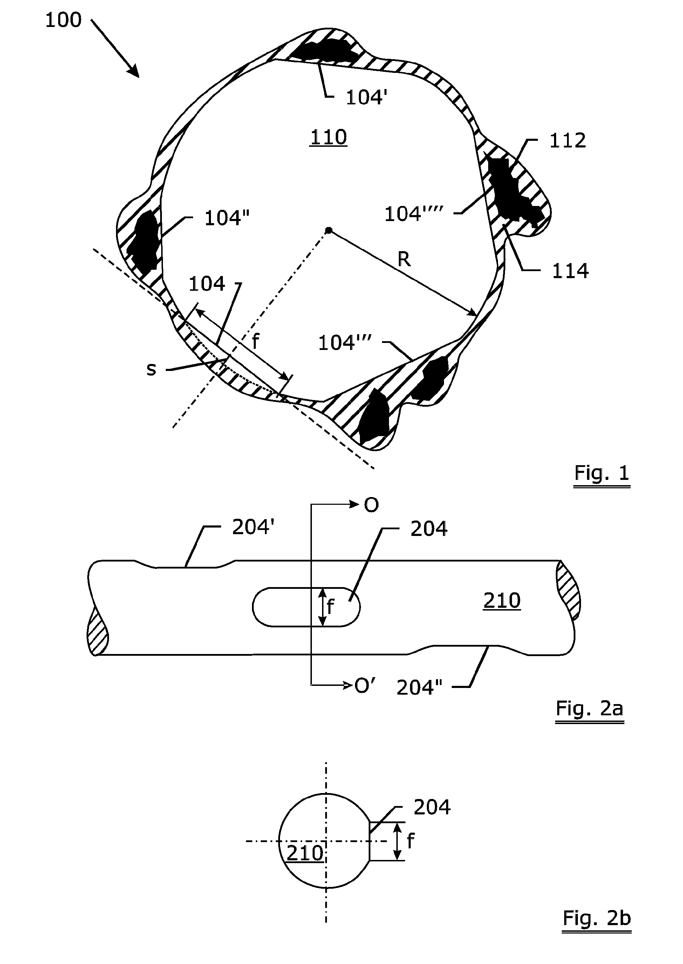

Figure 1 shows an implementation of the inventive fixed abrasive sawing wire 100 in a basic manner. A metal wire 110 - in this case a plain steel wire - of diameter 'D' 100 $\mu$m may be flattened by drawing the wire through a straightening device. A straightening device is a series of rollers with V-grooves in between which the wire passes. Some of the rollers may be replaced with a V-grooved wear part leading to flats indicated with numbers 104, 104', 104", 104"', 104"". In between the flats, the wire will remain round. The wire may have a brass coating (not indicated) of a negligible thickness (200 nm average). The tensile strength of the wire may be as high as 4150 N/mm$^2$.

The flat 104 has a flat width 'f' of about 35 $\mu$m while the wire may only be flattened 3 $\mu$m (sagitta 's' is 3 pm). On the surface of the metal wire 110 diamonds 112 may be attached. The diamonds have a median grain size of 20 - 30 $\mu$m i.e. the flat width are less than twice the median grain size. Although not all diamonds may have a flat side parallel to the flat on the wire, there will be a tendency for preference towards a flat on flat or 'face-to-face' attachment.

Figures 2 to 4 give different possibilities to implement a flat on a metal wire that can subsequently be used as a substrate for a fixed abrasive sawing wire. The figures are not drawn to exact scale and only illustrate the point. Figure 2a shows a metal wire 210 wherein locally different flats 204, 204', 204" have been made by e.g. etching away locally into the surface of the wire. The flat has a flat width 'f' as determined perpendicular to the axis of the wire as shown in the cross section OO' in figure 2b. As the amount of flat area is rather limited compared to the whole surface of the metal wire in this embodiment, the chances for obtaining diamonds on those spots is rather limited as well as the probability that a flat and a diamond side will align faces.

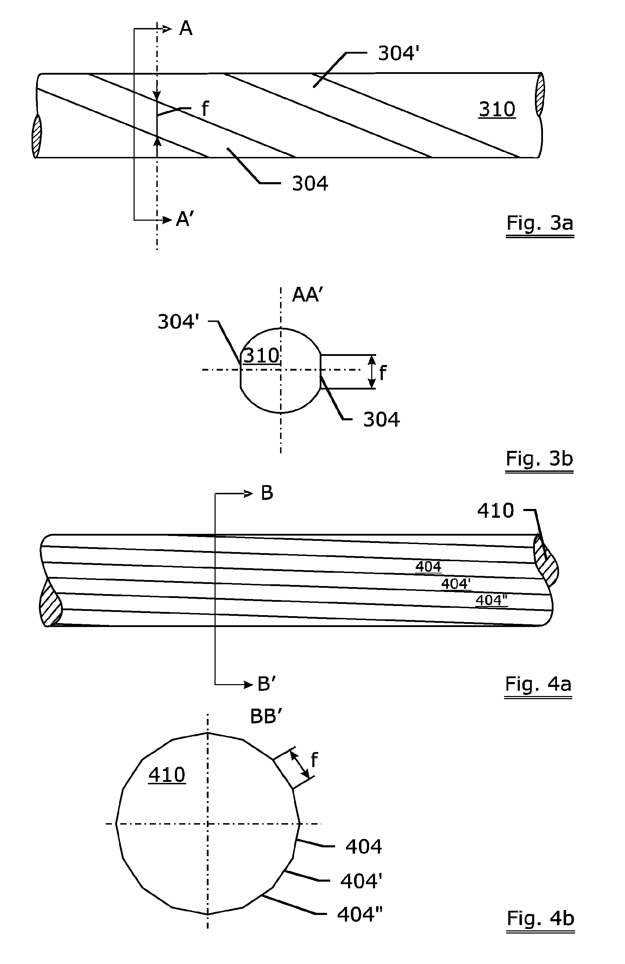

Figures 3a, 3b show a more preferred embodiment of a metal wire that can be used as a substrate wire for a fixed abrasive sawing wire. The metal wire has been obtained by rolling the metal wire 310 between two diametrically opposed flat rolls followed by application of a torsion on the wire. The resulting cross section along perpendicular plane AA' is shown in Figure 3b. A suitable method for implementing such flats - although of a too large width - is e.g. described in JP 2007-044841. The width of 'f' of the two flats 304, 304' can be controlled by setting the distance between the flat rolls to (D-2s). The two flats 304, 304' extend over the complete length of the wire. In this way more 'flat surface' is available to the abrasive particles in order to allow better sticking to the wire. Some twist can be given the wire, resulting in two helix flat paths.

Figures 4a and 4b describe an even more preferred metal wire, having 16 flats that extend along the length of the metal wire. The cross section, shown in Figure 4b, at the plane BB' perpendicular to the metal wire axis shows about 16 flats with a flat width 'f' extending along the length of the wire. Although the cross section appears already very much like a circle, the flats 404, 404', 404",... are still very well discernable under the microscope. In between the flats no segment of the originally round wire remains visible. Some of the flats may locally coalesce along the length of the wire. The metal wire can be obtained by passing a round wire through a train of 8 flat roll pairs each arranged under an angle of 22.5° compared to the preceding roll. Some twist has been induced on the wire but this is not a necessity of the invention.

The manufacturing of a preferred embodiment goes as follows:

a plain carbon steel wire rod (nominal diameter 5.5) can be used with a high carbon steel with a nominal carbon content of 0.925 wt% and a composition in line with that of paragraph [0015]. The wire is descaled, dry drawn to 3.05 mm, patented and further dry drawn to a diameter of 0.89 mm again followed by patenting. This intermediate wire is coated with an electrolytic copper coating of about 160 g of pure copper per kg of core wire. Pure copper has as conductivity of 59 MS/m (mega siemens per meter) while plain carbon steel has a conductivity of 5.56 MS/m. This wire is subsequently wet wire drawn to a total diameter of 127 μm. The steel core equivalent diameter is then 119 μm with a coating thickness of 4 μm. The tensile strength of the core can be estimated to be about 4200 N/mm². The interface clearly shows a degree of roughness with an arithmetical mean deviation roughness $R_a$ of about 0.80 μm and is even interlocking.

The resistance per meter is 6.5 Ω/m. The product of core metal conductivity and surface is 0.0618 Sm while the product of sheath metal conductivity and surface is 0.0912 Sm. So about 60 % of the electrical current will thus run through the sheath.

This wire can be lead through eight pairs of rollers that are adjusted to a gap size of 125 μm (D-2s) resulting in flats with a width of 22 to 23 μm. In this way a more or less regular polygon with 16 edges is formed. Note that the 'depth of flattening' (sagitta 's') is only of the order of 1 μm which is less than the thickness of the copper. It is preferred that this 'depth of flattening' remains smaller than the coating thickness to prevent that bare steel would come to the surface.

This metal wire can then be coated with diamonds in an electrolytical process. The diamonds may have a median size of 12 μm with a range from 8 to 16 μm (5 % and 95% limits) and may be nickel coated (30 % of nickel on the total weight). The electrolyte used in the electrolysis bath may have the following composition, acidity and temperature:

| Nikkelsulfamate electrolyte | Amount (unit) |
|---|---|
| Ni sulfamate (Ni(SO₃NH₂)₂·4H₂O) | 440 g/l |
| NiCl₂·6H₂O | 20 g/l |
| H₃BO₃ | 30-40 g/l |
| pH | 3,2 - 3,80 |
| Temperature | 45°C |

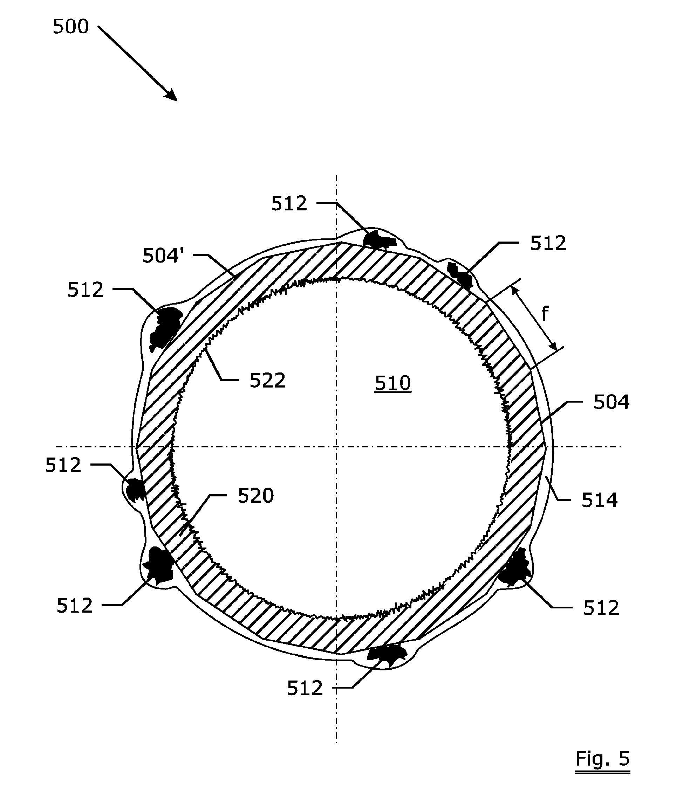

In subsequent baths, the nickel may further be thickened up until a thickness of about 4 μm of nickel is obtained.
In this way a fixed abrasive sawing wire of which the cross section 500 is depicted in Figure 5 may be obtained with an increased possibility for face-to-face contact between metal wire surface and abrasive particle. The wire has a core 510 that is surrounded with the copper sheath 520. Core and sheath form the metal wire that is the substrate to deposit the diamonds on. The interface between core and sheath 522 is rough and interlocking. The wire has 16 flats 504 with flat width 'f' between 22 to 23 μm. Preferably the abrasive particles 512 arrange face-to-face while being held by the nickel binder layer 512.

**Claims**

1. A fixed abrasive sawing wire comprising a metal wire and abrasive particles attached thereto by means of a metallic binder layer, said abrasive particles having a median size,
**characterised in that**
said metal wire has at least one flat, said flat having a flat width in cross section, said flat width being smaller or equal than twice said median size of said abrasive particles.

2. The fixed abrasive sawing wire according to claim 1 wherein said metal wire has flats extending along the length of the wire.

3. The fixed abrasive sawing wire according to claim 2 wherein the cross section of said metal wire shows has a polygonal cross section along the length of said metal wire.

4. The fixed abrasive sawing wire according to claim 3 wherein the number of sides of said substantial polygonal cross section is at least six.

5. The fixed abrasive sawing wire according to any one of claims 1 to 4 wherein said metal wire comprises a core and a sheath, said sheath being softer than said core.

6. The fixed abrasive sawing wire according to claim 5 wherein said core is made of plain carbon steel or stainless steel and wherein said sheath comprises one or more out of the group comprising copper, silver, aluminium, gold, zinc, tin, cobalt.

7. The fixed abrasive sawing wire according to any one of claims 5 or 6 wherein between said metal sheath and said core a rough interface is discernable in a metallographic cross section.

8. The fixed abrasive sawing wire according to claim 7 wherein the arithmetical mean deviation roughness $R_a$ of said rough interface is higher than 0.50 μm.

9. The fixed abrasive sawing wire according to any one of claims 5 or 6 wherein the product of the cross sectional area of the core and the electrical conductivity of the core metal is smaller than the product of the cross sectional area of the sheath and the electrical conductivity of the sheath metal.

10. The fixed abrasive sawing wire according to claim 9 wherein the core has an equivalent core diameter that is less than 96 per cent of the circumscribed circle diameter of said metal wire and wherein the electrical conductivity of said sheath metal is at least three times the electrical conductivity of said core metal.

11. The fixed abrasive sawing wire according to any one of claims 1 to 10 wherein said abrasive particles have a median size that is smaller than 50 μm.

12. The fixed abrasive sawing wire according to claim 11 wherein said abrasive particles are selected out of the group comprising diamond, cubic boron nitride, silicon carbide, aluminium oxide, silicon nitride, tungsten carbide or mixtures thereof.

13. The fixed abrasive sawing wire according to claim 12 wherein said abrasive particles are coated with a coating out of the group comprising titanium, titanium carbide, vanadium, zirconium, palladium, tungsten, tungsten carbide, chromium, iron, copper or nickel.

14. The fixed abrasive sawing wire according to any one of claims 1 to 13 wherein the metal in said metallic binder layer is one out of the group comprising iron, nickel, chromium, cobalt, molybdenum, tungsten, copper, zinc, tin, and alloys thereof.

Fig. 1

Fig. 2a

Fig. 2b

A

304'

f

310

304

A'

Fig. 3a

AA'

304'

310

304

f

Fig. 3b

B

410

404
404'
404"

B'

Fig. 4a

BB'

410

f

404

404'

404"

Fig. 4b

Fig. 5

Europäisches
Patentamt

European
Patent Office

Office européen
des brevets

# EUROPEAN SEARCH REPORT

Application Number

EP 11 18 2470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 021677 A (ASAHI DIAMOND IND) 1 February 2007 (2007-02-01) * abstract; figure 5 * | 1-14 | INV. B23D61/18 |
| X | US 4 015 931 A (THAKUR BABU N) 5 April 1977 (1977-04-05) * column 8, lines 8-19; figure 4 * * column 9, lines 29-35 * | 1-14 | |
| X | JP 2001 198790 A (SEIKO EPSON CORP) 24 July 2001 (2001-07-24) * abstract; figures * | 1-14 | |
| X,D | JP 2007 196329 A (NIPPON SEISEN CO LTD) 9 August 2007 (2007-08-09) * the whole document * | 1-14 | |
| X,D | WO 2010/125083 A1 (BEKAERT SA NV [BE]; CAMPOS GLAUBER [BE]; GOOSSENS DAVY [BE]) 4 November 2010 (2010-11-04) * figures * | 1-14 | |
| X A | US 7 089 925 B1 (LIN FRANK S [TW] ET AL) 15 August 2006 (2006-08-15) * paragraphs [0063], [0082]; claim 27; figure 5 * | 1-3 4-14 | TECHNICAL FIELDS SEARCHED (IPC) B23D B24B B28D |
| X | DE 37 42 285 A1 (LVT LOET UND VERSCHLEISSTECHNI [DE]) 22 June 1989 (1989-06-22) * figures * | 1-3 | |
| X | WO 2011/020105 A2 (SAINT GOBAIN ABRASIVES INC [US]; SAINT GOBAIN ABRASIFS SA [FR]) 17 February 2011 (2011-02-17) * page 5, lines 12-19; figures * | 1-3 | |

The present search report has been drawn up for all claims

| Place of search | Date of completion of the search | Examiner |
|---|---|---|
| The Hague | 17 February 2012 | Popma, Ronald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 18 2470

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2012

| Patent document cited in search report | | | Publication date | Patent family member(s) | | | Publication date |
|---|---|---|---|---|---|---|---|
| JP 2007021677 | A | | 01-02-2007 | NONE | | | |
| US 4015931 | A | | 05-04-1977 | DE | 2643617 | A1 | 07-04-1977 |
| | | | | IT | 1073825 | B | 17-04-1985 |
| | | | | JP | 52043191 | A | 04-04-1977 |
| | | | | PT | 65604 | A | 01-10-1976 |
| | | | | US | 4015931 | A | 05-04-1977 |
| | | | | ZA | 7605818 | A | 28-09-1977 |
| JP 2001198790 | A | | 24-07-2001 | NONE | | | |
| JP 2007196329 | A | | 09-08-2007 | NONE | | | |
| WO 2010125083 | A1 | | 04-11-2010 | EP | 2424702 | A1 | 07-03-2012 |
| | | | | SG | 175374 | A1 | 29-12-2011 |
| | | | | TW | 201105433 | A | 16-02-2011 |
| | | | | US | 2012037140 | A1 | 16-02-2012 |
| | | | | WO | 2010125083 | A1 | 04-11-2010 |
| US 7089925 | B1 | | 15-08-2006 | NONE | | | |
| DE 3742285 | A1 | | 22-06-1989 | NONE | | | |
| WO 2011020105 | A2 | | 17-02-2011 | US | 2011039070 | A1 | 17-02-2011 |
| | | | | WO | 2011020105 | A2 | 17-02-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2010055678 A
- WO 9946077 A
- US 6070570 A
- DE 916143
- US 20040001922 A
- EP 2277660 A
- JP 2010167509 A
- JP 2007196329 A
- JP 2003231063 A
- JP 2005238377 A
- US 20050087270 A
- WO 2010125083 A
- JP 2007044841 A